**Europäisches Patentamt**

**European Patent Office**

**Office européen des brevets**

(19)

(11) **EP 1 275 992 A1**

(12) **EUROPEAN PATENT APPLICATION**

(43) Date of publication:
**15.01.2003 Bulletin 2003/03**

(51) Int Cl.7: **G02B 6/34**

(21) Application number: **01305912.6**

(22) Date of filing: **09.07.2001**

(84) Designated Contracting States:
**AT BE CH CY DE DK ES FI FR GB GR IE IT LI LU MC NL PT SE TR**
Designated Extension States:
**AL LT LV MK RO SI**

(71) Applicant: **Aston Photonic Technologies Ltd.**
**Birmingham B7 4BB (GB)**

(72) Inventors:
• **Sugden, Catherine Anne, Indigo Photonics LTD**
**Birmingham B7 4BB (GB)**

• **Jurkschat, Kerstin, Indigo Photonics LTD**
**Birmingham B7 4BB (GB)**

(74) Representative: **Finnie, Peter John**
**Gill Jennings & Every,**
**Broadgate House,**
**7 Eldon Street**
**London EC2M 7LH (GB)**

(54) **Optical waveguide grating temperature compensation**

(57)     Optical waveguide grating temperature compensation apparatus 10 comprises a frame member in the form of an elongate tube 12 of Invar, and mounting means 14, 16, of Aluminium and Brass respectively, which are movably mounted on the tube 12. Each mounting means 14,16 is provided with fixing means 18, 20 for fixing an optical waveguide to each mounting means 14,16 respectively, such that a grating 22 may be located between the first mounting means 14 and the second mounting means 16. The apparatus 10 provides for adjustment of the amount of temperature compensation applied to the grating 22 without affecting the wavelength of the grating 22, and adjustment of the wavelength of the grating 22 without affecting the amount of temperature compensation applied to the grating 22. The apparatus 10 can be used in connection with an optical fibre grating 22 to provide a temperature compensated optical fibre grating device 60. The tube 12 forms a protective housing around the grating 22 thereby protecting the grating 22 from accidental damage.

FIG 2

**EP 1 275 992 A1**

## EP 1 275 992 A1

**Description**

The invention relates to optical waveguide grating temperature compensation apparatus and to a temperature compensated optical waveguide grating.

Optical waveguide gratings, such as fibre Bragg gratings, are commonly sensitive to temperature and strain, the wavelength of a grating changing in response to the temperature and/or strain applied to it, according to a known relationship. When using an optical waveguide grating as an optical filter it is generally desirable that the wavelength of the grating should remain constant. It is therefore desirable to remove, or compensate for, the effects of any changes in temperature on the grating wavelength. This is often referred to as grating athermalisation.

Known grating athermalisation devices are made from two materials having different, but constant, thermal expansion properties. The design of these known devices assumes that all gratings have the same characteristics, and that the gratings are all of desired wavelength. In practice this is not the case and can lead to gratings mounted within these athermalisation devices not performing as well as desired.

According to a first aspect of the present invention there is provided optical waveguide grating temperature compensation apparatus comprising;

a frame member of a first material having a first thermal expansion coefficient;
a first mounting means of a second material having a second thermal expansion coefficient, being movably mounted on the frame member towards one end thereof;
a second mounting means of a third material having a third thermal expansion coefficient, being movably mounted on the frame member towards the other end thereof, such that the first and second mounting means are located in a spaced relationship;
and the first and second mounting means each being provided with fixing means for fixing an optical waveguide thereto, such that a grating may be located between the first and second mounting means;
the first and second mounting means being movable with respect to the frame member so as to facilitate adjustment of the amount of temperature compensation applied to the grating without affecting the wavelength of the grating.

The first and second mounting means are preferably movable with respect to the frame member so as to additionally facilitate independent adjustment of the wavelength of the grating without affecting the amount of temperature compensation applied to the grating.

The optical waveguide grating is desirably an optical fibre grating, such as a fibre Bragg grating, a long period fibre grating, a sampled fibre grating or a side-etched fibre grating.

The first, second and third thermal expansion coefficients of the first, second and third materials respectively are preferably selected to give the temperature compensation apparatus a negative thermal expansion coefficient as seen by a grating located therein. The thermal expansion coefficients of each of the second and third materials are preferably greater than the thermal expansion coefficient of the first material. Desirably, the first mounting means is of substantially the same length as the second mounting means.

Alternatively, the first mounting means may be shorter in length than the second mounting means.

The first material may be a metal such as Invar or Kovar, or may be a ceramic material, such as ultralow expansion titanium silicate. The second material may be a metal or may be a polymer. The third material may be a metal, which must be a different metal to the second material, or a polymer, which must be a different polymer to the second material. The metal may be Aluminium, steel or brass.

The frame member is preferably elongate. The frame member may be generally tubular in shape, to thereby form a protective housing around a grating. The frame member is preferably a tube of generally circular cross-section. The frame member is desirably open at each end.

The mounting means are preferably selectively movable with respect to the frame member on which they are mounted. Each mounting means is preferably independently movable. The mounting means are preferably coaxial with one another, and are most preferably also coaxial with the longitudinal axis of the frame member.

Preferably, the first and second mounting means and the frame member together define a waveguide path along which part of the waveguide may be located. The waveguide path is desirably substantially linear, and is most desirably coaxial with the mounting means and the frame member.

Preferably, the first mounting means comprises a block of the said second material and the second mounting means comprises a block of the said third material. Each mounting means may comprise a substantially circular rod. Each mounting means preferably has a bore formed therethrough for receiving part of the optical waveguide, the bore defining part of the waveguide path. The bore is desirably coaxial with the mounting means, and most desirably extends substantially along the central longitudinal axis of the mounting means.

Preferably, fixing means are provided at one end of each mounting means, for fixing a waveguide to the mounting means. The fixing means may comprise a first recess at the one end extending from the circumferential surface of the fixing means to the bore, for receiving an adhesive for attaching a waveguide located within the bore to the mounting means. The first recess may comprise a substantially half-cylindrical cut-out section at the one end of the mounting means. The adhesive is preferably a curable adhesive, so that the adhesive is not activated until the waveguide is accurately positioned. The adhesive may be curable by exposure to visible light and/or ultra-violet light and/or heat.

The fixing means may alternatively comprise mechanical clamping means. The clamping means may comprise a block of deformable material having a bore formed therethrough, for receiving part of the waveguide, the block of deformable material being received within a second recess formed in the mounting means at the said one end and being mechanically deformable such that it may be clamped around a waveguide. The bore desirably extends along the central longitudinal axis of the block of deformable material.

The second recess preferably extends longitudinally into the mounting means from the end face at the said one end. The second recess is preferably of a complementary shape to the block of deformable material, such that the block is closely received within the second recess. The second recess is preferably coaxial with the bore in the mounting means, such that the bore in the block of deformable material is coaxial with the bore in the mounting means when received within the second recess.

Preferably, the bore in the block of deformable material is of substantially the same sectional shape and size as the bore in the mounting means. Each bore is desirably of a complementary shape and size to a waveguide to be received therethrough, most desirably being of a size to closely receive the waveguide but with sufficient clearance between the waveguide and the internal surface of the bore to permit easy movement of the waveguide through the bore.

The fixing means may additionally comprise a clamping tool operable to deform the block of deformable material, to thereby cause the waveguide to be clamped within the block of material.

The deformable material is desirably deformable at room temperature, and may be a copper/nickel alloy.

Each mounting means preferably further comprises drive means operable to cause the respective mounting means to move with respect to the frame member. The drive means may comprise a nut member having an internally threaded bore and being rotatably mountable on the other end of the mounting means, to come into abutment with the frame member, the circumferential surface of the mounting means being provided with a correspondingly threaded section, such that rotation of the nut member causes the mounting means to move through the nut member. Preferably, a plurality of marker indicia are provided on the external surface of the frame member at each end and a marker indicia is provided on the external surface of each nut member to thereby allow lateral movement of a mounting means through the respective nut member to be measured. The separations between adjacent marker indicia on the frame member preferably correspond to equal fractions of one rotation of the respective nut member, which corresponds to a lateral movement of the mounting means of substantially the same fraction of one thread pitch.

The drive means may further comprise a first gearing mechanism between a nut member and the threaded section of the respective mounting means, the first gearing mechanism being operable to convert one rotation of the nut member into a lateral movement of the mounting means through the respective nut member equal to a fraction of one thread pitch.

The drive means may alternatively or additionally further comprise a second gearing mechanism within one or each nut member, the second gearing mechanism being operable by a rotatable tool, whereby one rotation of the tool is converted by the gearing mechanism into a rotation of the nut member equal to a fraction of one full rotation of the nut member.

The drive means may further comprise a key means engageable with a nut, the key means being operable to cause rotation of the nut. The key means may be engageable with the nuts on both the first and second mounting means, the key means being operable to cause the nuts to turn together.

According to a further aspect of the present invention there is provided a temperature compensated optical waveguide grating device comprising an optical waveguide grating mounted within optical waveguide grating temperature compensation apparatus according to any of paragraphs four to twenty two above.

Preferably, an initial strain is applied to the optical waveguide grating by the optical waveguide grating temperature compensation apparatus.

Specific embodiments of the invention will now be described in detail, by way of example only, with reference to the accompanying drawings, in which:

Fig. 1 is an exploded diagrammatic representation of an optical waveguide grating temperature compensation apparatus according to the present invention, in part in cross-section;
Fig. 2 is a diagrammatic representation in part in cross-section of an optical waveguide grating temperature compensation apparatus similar to that shown in Fig. 1, with an optical waveguide grating shown located in the apparatus;
Fig. 3 is a diagrammatic perspective view of a mounting means of the temperature compensation apparatus of Fig. 1, shown with an optical waveguide located therethrough;

Fig. 4 is a part sectional view along the line A-A of Fig. 3, showing the fixing means; and

Fig. 5 is a diagrammatic sectional view of an alternative mounting means having an alternative fixing means.

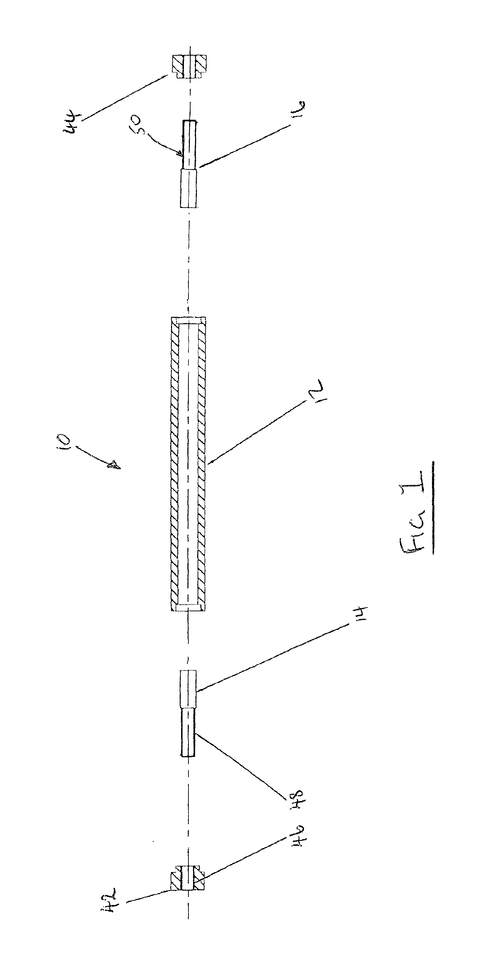

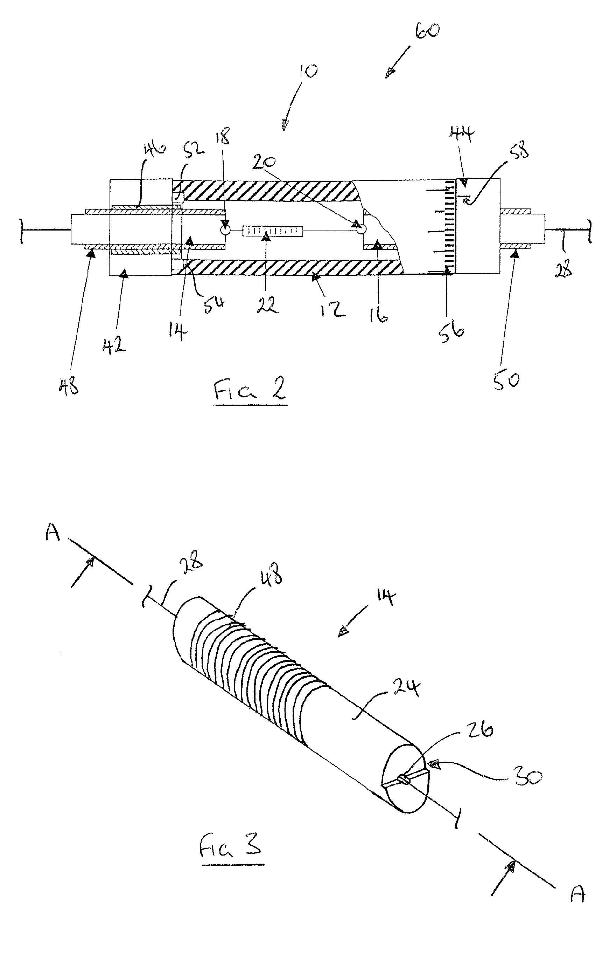

Figs. 1 and 2 of the drawings show optical waveguide grating temperature compensation apparatus 10 according to a first aspect of the present invention. The temperature compensation apparatus 10 comprises a frame member in the form of an elongate tube 12, and mounting means 14, 16 which are movably mounted on the tube 12. Each mounting means 14,16 is provided with fixing means 18, 20 for fixing an optical waveguide to each mounting means 14,16 respectively, such that a grating 22 may be located between the first mounting means 14 and the second mounting means 16, as shown in Fig. 2.

The first mounting means 14 is movably mounted on the tube 12 towards one end, and the second mounting means 16 is movably mounted on the tube 12 towards the other end, such that the first mounting means 14 and the second mounting means 16 are located in a spaced relationship. The mounting means 14, 16 define a space across which a section of waveguide containing a grating 22 may be mounted.

The first mounting means 14 and the second mounting means 16 are movable with respect to the tube 12. This allows adjustment of the amount of temperature compensation applied to the grating 22 without affecting the wavelength of the grating 22, and adjustment of the wavelength of the grating 22 without affecting the amount of temperature compensation applied to the grating 22 as will be discussed in more detail below.

The temperature compensation apparatus 10 shown in Figs. 1 and 2 is particularly suitable for use with an optical fibre, the grating 22 being an optical fibre grating, such as a fibre Bragg grating.

The tube 12 provides the additional function of forming a protective housing around a grating 22 located within the apparatus 10. In this example, the tube 12 is of generally circular cross-section, and is open at each end. The tube 12 is fabricated from Invar, being a metal having a relatively low thermal expansion coefficient ($1 \times 10^{-6}$ $^\circ$C$^{-1}$). The tube 12 has a length of 48mm.

The first mounting means 14 comprises a metal rod 24, of substantially circular cross-section, having a central bore 26 formed therethrough. The metal rod 24 is 15mm in length and is made of Aluminium. Aluminium has a thermal expansion coefficient of $23 \times 10^{-6}$ $^\circ$C$^{-1}$. The bore 26 extends along the central longitudinal axis of the rod 24. The cross-sectional dimensions of the bore 26 are greater than the cross-sectional dimensions of the waveguide, which in this example is an optical fibre 28, which is to be received through the bore 26.

The second mounting means 16 comprises a brass rod of the same size and structure as the first mounting means 14. Brass has a thermal expansion coefficient of $20 \times 10^{-6}$ $^\circ$C$^{-1}$.

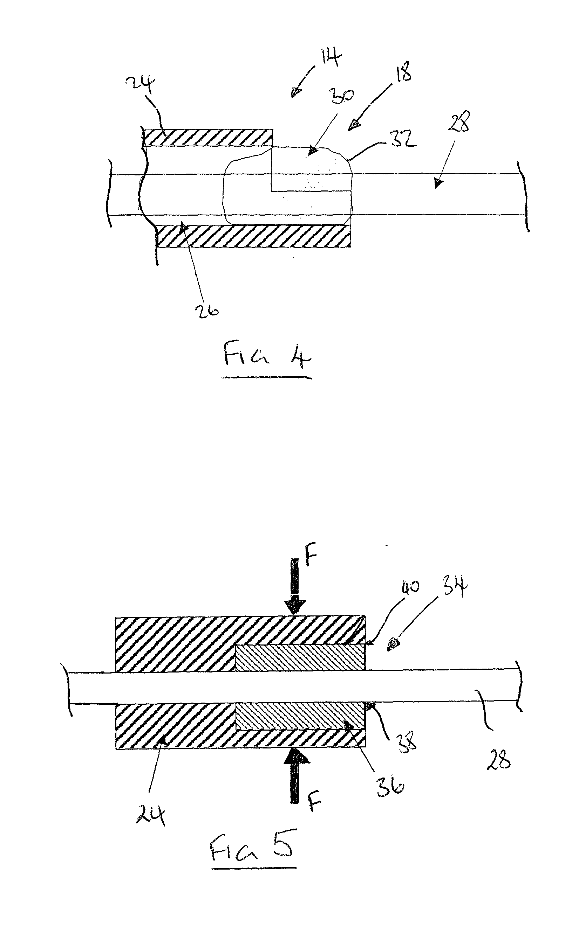

Referring in particular to Figs. 3 and 4, the fixing means 18,20 each comprise, in this example, a recess 30 formed at the, in use, innermost end of the respective mounting means 14, 16. Only the first mounting means 14 is shown in the figures, but it will be appreciated that the fixing means 20 of the second mounting means 16 is of the same construction.

The recess 30 comprises a half-cylindrical disc cut-away section at the said innermost end of the rod 24. The recess 30 forms a reservoir for receiving adhesive 32 for attaching an optical fibre 28 located within the bore 26 to the rod 24.

The adhesive 32 is a curable adhesive, so that the adhesive 32 is not activated until the optical fibre 28 is accurately positioned within the bore 26. In this example an ultra-violet light curable adhesive is used, but it will be appreciated that other curable adhesives may be used in its place, such as those curable by exposure to visible light or heat.

Fig. 5 shows an alternative fixing means 34. The fixing means 34 comprises mechanical clamping means in the form of a block of deformable material 36 having a central bore 38 formed therethrough, for receiving a part of an optical fibre 28. The deformable material is deformable at room temperature, and in this example comprises a copper/nickel alloy.

The block of deformable material 36 is received within a recess 40 formed in the rod 24, at its, in use, innermost end. The recess 40 extends longitudinally into the rod 24 from the said in use innermost end face. The recess 40 is of a complementary shape to the block of deformable material 36, so that the block of material 36 is closely received within the recess 40, and retained therein. The recess 40, the block of deformable material 36 and the bore 38 through the block of deformable material 36 are coaxial with one another and with the bore 26 through the rod 24. This ensures that the bore 38 in the block of deformable material 36 forms an extension to the bore 26 through the rod 24.

In this example, the bore 38 in the block of deformable material 36 is of substantially the same sectional size and shape as the bore 26 in the rod 24.

The bore 38 through the block of deformable material 36 is of a complementary size and shape to the optical fibre 28 to be received therethrough, and to allow sufficient clearance between the optical fibre 28 and the internal surface of the bore 38 to permit easy movement of the optical fibre 28 through the bore 38. Sufficient clearance is also provided to ensure that the block of deformable material 36 can readily be deformed around the optical fibre 28.

To actuate the fixing means 34, external force is applied to the rod 24, at generally opposing locations on the circumferential surface of the rod 24, as indicated by the arrows F in Fig. 5. The applied force causes deformation of the deformable material 36 around the optical fibre 28 located therethrough, thereby applying a frictional, crimping force to the surface of the fibre 28. The optical fibre 28 is thus attached to the rod 24. A crimping tool (not shown) may be provided by which a user may apply the crimping force.

As can be seen in Figs. 1 and 2, each of the first mounting means 14 and the second mounting means 16 also respectively comprise drive means 42, 44 operable to cause the mounting means 14, 16 to move with respect to the tube 12. The available movement of the mounting means 14, 16 allows the space between the mounting means 14, 16 to be altered, and allows the length of each mounting means 14, 16 received within the tube 12 to be altered.

In this example, the drive means 42, 44 take the form of nuts having an internally threaded bore 46. The nuts 42,44 are rotatably mounted on their respective mounting means 14, 16 towards the, in use, outermost end of the mounting means 14, 16. The first mounting means rod 24 is provided with a correspondingly threaded section 48 for cooperative engagement with the nut 42. The second mounting means 16 is similarly provided with a correspondingly threaded section 50.

In this example, each nut 42, 44 is provided with a locating projection 52 for receipt in a corresponding recess 54 formed in the end of the tube 12. The projection 52 and the recess 54 are substantially ring shaped. The projection 52 and the recess 54, when engaged with one another, serve to align the respective nut 42, 44 with the tube 12, to thereby ensure that the mounting means 14, 16 are coaxial with one another, so that the optical waveguide path defined by the bores 26 of the mounting means 14, 16 is a substantially linear path. This is required to ensure that any strain applied to a grating 22 is applied axially along the grating 22. Having a substantially linear optical waveguide path will also help to prevent an optical fibre 28 from becoming twisted or bent within the apparatus 10.

At each end of the tube 12 marker indicia 56 are provided around the circumferential surface of the tube 12, against which the amount of rotation of a nut 42, 44, and hence the lateral movement of the respective mounting means 14, 16 may be measured. The separation between adjacent indicia 56 corresponds to a known fraction of one complete rotation of a nut 42, 44, which corresponds to a lateral movement of the respective mounting means 14, 16 through the nut 42, 44 of the same fraction of one thread pitch of the threaded section 48, 50 of the mounting means 14, 16. Each nut 42, 44 is provided with an indicator marker 58 by which rotation of the nut 42, 44 may be observed.

In use, an optical waveguide, including a grating 22 is first located through the mounting means 14, 16 such that the section of waveguide containing the grating 22 is located in between the two mounting means 14, 16. In this example, the waveguide takes the form of an optical fibre 28. The optical fibre 28 is then attached to each mounting means 14, 16 via the respective fixing means 18, 20 or 34, so that the grating 22 is securely held in between the two mounting means 14, 16. The sections of optical fibre 28 on either side of the grating 22 extend through the mounting means 14, 16 and out of the other end of each mounting means 14, 16.

The two mounting means 14, 16, the fibre 28 and the grating 22 are then passed through the tube 12 and arranged such that part of each mounting means 14, 16 is located within the tube 12, and the rest of each mounting means 14, 16 extends outwardly from the respective ends of the tube 12.

The grating 22 is located within the tube 12, in between the two mounting means 14, 16. Each nut 42, 44 is then threaded onto the respective mounting means 14, 16, and rotated, by hand or using a key tool (not shown) engageable with a nut, along the respective threaded sections 48, 50 of the mounting means 14, 16 until the projections 52 on each nut 42, 44 come into engagement with their respective recesses 54 provided in the tube 12.

In this example, a 10.5mm length of the first (Aluminium) mounting means 14 is located within the tube 12 and an 8mm length of the second (Brass) mounting means is located within the tube 12. The separation between the two mounting means 14, 16, i.e. the length of optical fibre located between the two mounting means 14, 16, is 29.5mm.

One or both of the nuts 42, 44 are then rotated independently or together, by hand or using the key tool, in order to make a small increase in the separation between the mounting means 14, 16, to thereby apply a small initial amount of strain to the grating 22. The apparatus 10 then serves to provide temperature compensation of the grating 22, in the following manner.

The apparatus 10 makes use of the relationship between the wavelength of an in-fibre Bragg grating and the applied temperature and strain, which are related according to the following known formula:

$$\frac{\Delta\lambda}{\lambda} = \left(\alpha_f + \varsigma\right)\Delta T + \left(1 - p_c\right)\Delta \in$$

in which $\lambda$ is the wavelength of the grating, $\alpha_f$ is the thermal expansion coefficient of the fibre, $\varsigma$ is the thermo-optic coefficient of the fibre and $p_c$ is the photo-elastic coefficient of the fibre.

For standard fibre the following coefficients may be used in the above equation.

$$\alpha_f = \text{thermal expansion coefficient of fused silica} = 0.55 \times 10^{-6} \; {}^{\circ}C^{-1}$$

$$\zeta = \text{thermo-optic coefficient of germanosilicate glass} = 8.31 \times 10^{-6} \; {}^{\circ}C^{-1}$$

$$p_e = \text{photo-elastic coefficient of germanosilicate glass} = 0.22 \times 10^{-6} \; {}^{\circ}C^{-1}$$

In this example, the grating 22 is a 1cm long fibre Bragg grating fabricated in standard fibre. The grating 22 has a central/peak wavelength of 1550.517nm (being an ITU grid wavelength) and a bandwidth of 0.2 nm. This grating 22 is suitable for use as an optical filter, in a wavelength division multiplexed telecommunications system, for filtering at a specific ITU grid wavelength.

In this example, the tube 12 is fabricated from Invar, which has a low thermal expansion coefficient ($1 \times 10^{-6}$ $^{\circ}C^{-1}$). The first mounting means 14 is fabricated from aluminium which has a higher thermal expansion coefficient ($23 \times 10^{-6} \; {}^{\circ}C^{-1}$). The second mounting means is fabricated from brass which also has a thermal expansion coefficient ($20 \times 10^{-6} \; {}^{\circ}C^{-1}$) that is higher than the thermal expansion coefficient of Invar.

An increase in the ambient temperature results in the tube 12 expanding at a lower rate than either of the mounting means 14, 16. This results in the distance between the two mounting means 14, 16, and thus the distance between the points at which the optical fibre is attached to the mounting means 14, 16 being reduced in response to the rise in ambient temperature. Because the temperature compensation apparatus 10 is arranged such that the grating is pre-strained at room temperature, i.e. the grating 22 has an initial strain applied to it, the reduction in the separation between the two mounting means 14, 16 results in a decrease in the amount of strain experienced by the grating. An increase in the wavelength of the grating 22 caused by the increase in temperature is therefore cancelled out by the reduction in the wavelength of the grating 22 caused by the reduction in the amount of strain applied to the grating 22.

By selection of the materials from which the tube 12 and the mounting means 14, 16 are fabricated, and of the lengths of the tube 12 and the two mounting means 14, 16 compared to the separation between the two mounting means, i.e. the length of optical fibre which is initially strained, the temperature compensation apparatus 10 is given an effective negative thermal expansion coefficient, as seen by the grating 22, because strain on the grating reduces as temperature increases. The apparatus 10 can therefore act to compensate for a change in the wavelength of the grating caused by a change in the ambient temperature experienced by the grating and by the thermal expansion coefficient of the fibre.

In addition, fabricating the mounting means 14, 16 from two different materials, facilitates adjustment of the amount of temperature compensation that can be applied to the grating 22. That is to say the rate of change of grating wavelength as a function of temperature change can be controlled.

Initially, as described above, 10.5mm of the first (Aluminium) mounting means 14 is received within the tube 12 and 8mm of the second (Brass) mounting means 16 is received within the tube 12.

If the length of, for example, the first mounting means 14 received within the tube 12 is increased and the length of the second mounting means 16 received within the tube 12 is decreased by the same amount, or vice versa, the difference in the thermal expansion coefficient of the two materials causes a change in the rate of change of the grating wavelength as a function of change in applied temperature, without changing the strain on the fibre i.e. without affecting the wavelength of the grating 22.

For example, decreasing the length of the first mounting means 14 received within the tube 12 by 1mm, to 9.5mm, and increasing the length of the second mounting means 16 received within the tube 12 by 1mm, to 9mm, will produce a change in the rate of change of grating wavelength with temperature

$$\left(\frac{\Delta\lambda}{\Delta T}\right)$$

of 0.13pm $^{\circ}C^{-1}$.

The greater the difference between the length of the first mounting means 14, having the higher thermal expansion coefficient of the two mounting means 14, 16, received within the tube 12 and the length of the second mounting means 16, having the lower thermal expansion coefficient, received within the tube 12, the faster the strain applied to the grating 22 decreases.

If a grating 22 packaged within the temperature compensation apparatus 10 does not have sufficient temperature compensation applied to it, i.e. the wavelength of the grating still increases as the ambient temperature increases, the amount of temperature compensation applied to the grating 22 can be increased by increasing the length of the first mounting means 14 received within the tube 12 with respect to the length of the second mounting means 16 received within the tube 12. In more general terms, the length of the mounting means having the higher thermal expansion coefficient received within the tube 12 is increased with respect to the length of the mounting means having the lower thermal expansion coefficient received within the tube 12. If too much temperature compensation is being applied to the grating 22, i.e. if the grating wavelength is decreasing as the ambient temperature increases, the amount of temperature compensation applied to the grating 22 can be decreased by decreasing the length of the higher thermal expansion material mounting means 14 received within the tube 12 with respect to the length of the lower thermal expansion material mounting means 16 received within the tube 12.

The temperature compensation apparatus 10 according to the present invention also allows for tuning of the wavelength of the grating 22 without affecting the amount of temperature compensation applied to the grating 22. A small change in the ratio of the lengths of the two mounting means 14,16 received within the tube will result in a change in the distance between the two mounting means 14, 16 within the tube 12, and hence a change in the distance between the points at which the fibre is attached to the respective mounting means 12, 14. This will result in a change in the strain applied to the grating 22, which will result in a change to the grating wavelength.

For example, a change in the distance between the two mounting means 14, 16 of 0.2mm will produce a change in the wavelength of the grating 22 of approximately 8mm. A change in the distance between the two mounting means 14, 16 of 0.5mm will produce a change in the wavelength of the grating 22 of approximately 20.5mm.

If by changing the wavelength of the grating 22 the amount of temperature compensation applied to the grating 22 is altered, this can be corrected for using the method described above.

The apparatus 10 described above can be used in connection with an optical fibre grating 22 to provide a temperature compensated optical fibre grating device 60, as shown in Fig. 2. In this example, the tube 12 forms a protective housing around the grating 22 thereby protecting the grating 22 from accidental damage. The temperature compensated grating device 60 may be used in many different applications where a substantially athermalised grating is required. For example, as an optical filter at an ITU grid wavelength within a wavelength division multiplexed telecommunications system.

The ability to change the amount of temperature compensation applied to a grating located within a temperature compensation apparatus according to the present invention is advantageous because the materials used to make each temperature compensation apparatus may not be identical in their thermal characteristics, and gratings may be fabricated in many different types of optical fibre, each of which may have slightly different thermal expansion characteristics. The ability to tune the wavelength of the grating within the temperature compensation apparatus according to the present invention is also advantageous because the wavelength of the grating can change following fabrication, and during the packaging of a grating within the temperature compensation apparatus. In addition, it is difficult to fabricate a plurality of gratings each to have exactly the same wavelength, and it is therefore advantageous to be able to tune the wavelength of a grating to exactly the required grating wavelength before using the grating. The apparatus described above allows these variations to be accommodated.

Various modifications may be made to the above described embodiments of the present invention, without departing from the scope of the present invention. For example, the tube may be fabricated from a different metal, such as Kovar, or from a ceramic material, such as ultralow expansion titanium silicate. The mounting means may also be fabricated from a different metal, or from a polymer.

It will be appreciated by the skilled person that different fixing means may be used to securely attach an optical waveguide to the mounting means. It will also be understood that waveguides other than optical fibres may be used with the temperature compensation apparatus according to the present invention, and that different types of gratings may be used. Other waveguides may be non-circular in cross-section and if will be understood that the sectional shape of the bore through each mounting means may be non-circular also, and will be at least partially determined by the sectional shape of the waveguide to be received therethrough.

The drive means arrangement illustrated may be replaced by any other suitable drive means by which the mounting means may be selectively and controllably moved with respect to the tube. The drive means may include one or more gearing mechanisms in order to allow smaller movements to be produced. In the example described a gearing mechanism may be provided between a nut member and the respective mounting means and/or between the nut member and an external rotatable tool.

It will also be appreciated that although the frame member takes the form of a tube in the examples described, the frame member does not need to enclose the grating, but merely to form a frame on which the mounting means may be movably mounted.

The skilled person will also understand that the same temperature compensation effects may be achieved by replacing one of the mounting means described with a mounting means of a shorter length.

Whilst endeavouring in the foregoing specification to draw attention to those features of the invention believed to be of particular importance it should be understood that the Applicant claims protection in respect of any patentable feature or combination of features hereinbefore referred to and/or shown in the drawings whether or not particular emphasis has been placed thereon.

**Claims**

1. Optical waveguide grating temperature compensation apparatus **characterised in that** the apparatus comprises;

   a frame member of a first material having a first thermal expansion coefficient;
   a first mounting means of a second material having a second thermal expansion coefficient, being movably mounted on the frame member towards one end thereof;
   a second mounting means of a third material having a third thermal expansion coefficient, being movably mounted on the frame member towards the other end thereof, such that the first and second mounting means are located in a spaced relationship;
   and the first and second mounting means each being provided with fixing means for fixing an optical waveguide thereto, such that a grating may be located between the first and second mounting means;
   the first and second mounting means being movable with respect to the frame member so as to facilitate adjustment of the amount of temperature compensation applied to the grating without affecting the wavelength of the grating.

2. Apparatus as defined in claim 1 wherein the first and second mounting means are movable with respect to the frame member so as to additionally facilitate independent adjustment of the wavelength of the grating without affecting the amount of temperature compensation applied to the grating.

3. Apparatus as defined in claims 1 or 2 wherein the optical waveguide grating is an optical fibre grating, such as a fibre Bragg grating, a long period fibre grating, a sampled fibre grating or a side-etched fibre grating.

4. Apparatus as defined in any of claims 1 to 3 wherein the first, second and third thermal expansion coefficients of the first, second and third materials respectively are selected to give the temperature compensation apparatus a negative thermal expansion coefficient as seen by a grating located therein.

5. Apparatus as defined in claim 4 wherein the thermal expansion coefficients of each of the second and third materials are greater than the thermal expansion coefficient of the first material.

6. Apparatus as defined in any of claims 1 to 5 wherein the first mounting means is of substantially the same length as the second mounting means.

7. Apparatus as defined in any of claims 1 to 5 wherein the first mounting means are shorter in length than the second mounting means.

8. Apparatus as defined in any of claims 4 to 7 wherein the first material is a metal such as Invar or Kovar.

9. Apparatus as defined in any of claims 4 to 7 wherein the first material is a ceramic material, such as ultralow expansion titanium silicate.

10. Apparatus as defined in any of claims 4 to 9 wherein the second material is a metal or a polymer.

11. Apparatus as defined in claim 10 wherein the third material is a metal, which must be a different metal to the second material, or a polymer, which must be a different polymer to the second material.

12. Apparatus as defined in claims 10 or 11 wherein the metal is Aluminium, steel or brass.

13. Apparatus as defined in any preceding claim wherein the frame member is elongate and may be generally tubular in shape, to thereby form a protective housing around a grating.

14. Apparatus as defined in claim 13 wherein the frame member is a tube of generally circular cross-section and is open at each end.

15. Apparatus as defined in claims 13 or 14 wherein the mounting means are coaxial with one another, and are also coaxial with the longitudinal axis of the frame member.

16. Apparatus as defined in any preceding claim wherein the mounting means are selectively movable with respect to the frame member on which they are mounted.

17. Apparatus as defined in claim 16 wherein each mounting means is independently movable.

18. Apparatus as defined in any preceding claim wherein the first and second mounting means and the frame member together define a waveguide path along which part of the waveguide may be located.

19. Apparatus as defined in claim 18 wherein the waveguide path is substantially linear, and is coaxial with the mounting means and the frame member.

20. Apparatus as defined in claims 18 or 19 wherein the first mounting means comprises a block of the said second material and the second mounting means comprises a block of the said third material.

21. Apparatus as defined in claim 20 wherein each mounting means comprises a substantially circular rod and has a bore formed therethrough for receiving part of the optical waveguide, the bore defining part of the waveguide path.

22. Apparatus as defined in claim 21 wherein the bore is coaxial with the mounting means, and extends substantially along the central longitudinal axis of the mounting means.

23. Apparatus as defined in claims 21 or 22 wherein fixing means are provided at one end of each mounting means, for fixing a waveguide to the mounting means.

24. Apparatus as defined in claim 23 wherein the fixing means comprise a first recess at the one end extending from the circumferential surface of the fixing means to the bore, for receiving an adhesive for attaching a waveguide located within the bore to the mounting means.

25. Apparatus as defined in claim 24 wherein the first recess comprises a substantially half-cylindrical cut-out section at the one end of the mounting means.

26. Apparatus as defined in claims 24 or 25 wherein the adhesive is a curable adhesive, so that the adhesive is not activated until the waveguide is accurately positioned, and may be curable by exposure to visible light and/or ultra-violet light and/or heat.

27. Apparatus as defined in claims 21 or 22 wherein the fixing means comprises mechanical clamping means.

28. Apparatus as defined in claim 27 wherein the clamping means comprise a block of deformable material having a bore formed therethrough, for receiving part of the waveguide, the block of deformable material being received within a second recess formed in the mounting means at the said one end and being mechanically deformable such that it may be clamped around a waveguide.

29. Apparatus as defined in claim 28 wherein the bore extends along the central longitudinal axis of the block of deformable material.

30. Apparatus as defined in claims 28 or 29 wherein the second recess extends longitudinally into the mounting means from the end face at the said one end.

31. Apparatus as defined in any of claims 28 to 30 wherein the second recess is of a complementary shape to the block of deformable material, such that the block is closely received within the second recess.

32. Apparatus as defined in any of claims 28 to 31 wherein the second recess is coaxial with the bore in the mounting means, such that the bore in the block of deformable material is coaxial with the bore in the mounting means when received within the second recess.

33. Apparatus as defined in any of claims 28 to 32 wherein the bore in the block of deformable material is of substantially the same sectional shape and size as the bore in the mounting means.

34. Apparatus as defined in claim 33 wherein each bore is of a complementary shape and size to a waveguide to be received therethrough, being of a size to closely receive the waveguide but with sufficient clearance between the waveguide and the internal surface of the bore to permit easy movement of the waveguide through the bore.

35. Apparatus as defined in any of claims 28 to 34 wherein the fixing means additionally comprises a clamping tool operable to deform the block of deformable material, to thereby cause the waveguide to be clamped within the block of material.

36. Apparatus as defined in any of claims 28 to 35 wherein the deformable material is deformable at room temperature, and may be a copper/nickel alloy.

37. Apparatus as defined in any of claims 23 to 36 wherein each mounting means further comprises drive means operable to cause the respective mounting means to move with respect to the frame member.

38. Apparatus as defined in claim 37 wherein the drive means comprises a nut member having an internally threaded bore and being rotatably mountable on the other end of the mounting means, to come into abutment with the frame member, the circumferential surface of the mounting means being provided with a correspondingly threaded section, such that rotation of the nut member causes the mounting means to move through the nut member.

39. Apparatus as defined in claim 38 wherein a plurality of marker indicia are provided on the external surface of the frame member at each end and a marker indicia is provided on the external surface of each nut member to thereby allow lateral movement of a mounting means through the respective nut member to be measured.

40. Apparatus as defined in claim 39 wherein the separations between adjacent marker indicia on the frame member correspond to equal fractions of one rotation of the respective nut member, which corresponds to a lateral movement of the mounting means of substantially the same fraction of one thread pitch.

41. Apparatus as defined in any of claims 38 to 40 wherein the drive means further comprises a first gearing mechanism between a nut member and the threaded section of the respective mounting means, the first gearing mechanism being operable to convert one rotation of the nut member into a lateral movement of the mounting means through the respective nut member equal to a fraction of one thread pitch.

42. Apparatus as defined in claims 38 to 41 wherein the drive means may further comprises a second gearing mechanism within one or each nut member, the second gearing mechanism being operable by a rotatable tool, whereby one rotation of the tool is converted by the gearing mechanism into a rotation of the nut member equal to a fraction of one full rotation of the nut member.

43. Apparatus as defined in any of claims 38 to 42 wherein the drive means further comprises a key means engageable with a nut, the key means being operable to cause rotation of the nut.

44. Apparatus as defined in claim 43 wherein the key means is engageable with the nuts on both the first and second mounting means, the key means being operable to cause the nuts to turn together.

45. A temperature compensated optical waveguide grating device comprising an optical waveguide grating mounted within optical waveguide grating temperature compensation apparatus as defined in any of claims 1 to 44.

46. A device as defined in claim 45 wherein an initial strain is applied to the optical waveguide grating by the optical waveguide grating temperature compensation apparatus.

47. Any novel subject matter or combination including novel subject matter disclosed herein, whether or not within the scope of or relating to the same invention as any of the preceding claims.

Fig 1

Fig 2

Fig 3

Fig 4

Fig 5

EP 1 275 992 A1

**European Patent Office**

**EUROPEAN SEARCH REPORT**

Application Number

EP 01 30 5912

## DOCUMENTS CONSIDERED TO BE RELEVANT

| Category | Citation of document with indication, where appropriate, of relevant passages | Relevant to claim | CLASSIFICATION OF THE APPLICATION (Int.Cl.7) |
|---|---|---|---|
| E | WO 01 67142 A (CIDRA CORP) 13 September 2001 (2001-09-13) * abstract; figure 10 * * page 16, line 12 - line 17 * | 1-4,13, 16,17, 45,46 | G02B6/34 |
| A | US 5 991 483 A (ENGELBERTH JON W) 23 November 1999 (1999-11-23) * abstract; figures * * column 1, line 61 - column 2, line 66 * | 1-47 | |
| A | US 6 081 641 A (CHEN PETER Z) 27 June 2000 (2000-06-27) * abstract; figure 6 * * column 6, line 23 - line 36 * | 1-47 | |
| A | US 5 682 445 A (SMITH RONALD H) 28 October 1997 (1997-10-28) * abstract; figures 2,4,7 * * column 11, line 35 - column 12, line 13 * | 1,3,13, 45 | TECHNICAL FIELDS SEARCHED (Int.Cl.7) |
| A | PATENT ABSTRACTS OF JAPAN vol. 2000, no. 07, 29 September 2000 (2000-09-29) & JP 2000 121844 A (FURUKAWA ELECTRIC CO LTD:THE), 28 April 2000 (2000-04-28) * abstract * | 1-47 | G02B |
| A | US 6 101 301 A (LEMAIRE PAUL JOSEPH ET AL) 8 August 2000 (2000-08-08) * abstract; figure 3B * * column 5, line 44 - line 60 * | 1-47 | |
| A | DE 197 24 528 A (INST PHYSIKALISCHE HOCHTECH EV) 24 December 1998 (1998-12-24) * abstract; figures 1,2 * * page 1, line 68 - page 2, line 39 * | 1 | |

-/--

The present search report has been drawn up for all claims

| Place of search | Date of completion of the search | Examiner |
|---|---|---|
| THE HAGUE | 22 April 2002 | Faderl, I |

CATEGORY OF CITED DOCUMENTS

X : particularly relevant if taken alone
Y : particularly relevant if combined with another document of the same category
A : technological background
O : non-written disclosure
P : intermediate document

T : theory or principle underlying the invention
E : earlier patent document, but published on, or after the filing date
D : document cited in the application
L : document cited for other reasons
& : member of the same patent family, corresponding document

European Patent Office

**EUROPEAN SEARCH REPORT**

Application Number

EP 01 30 5912

## DOCUMENTS CONSIDERED TO BE RELEVANT

| Category | Citation of document with indication, where appropriate, of relevant passages | Relevant to claim | CLASSIFICATION OF THE APPLICATION (Int.Cl.7) |
|---|---|---|---|
| A | US 6 243 527 B1 (DAWSON-ELLI DAVID F) 5 June 2001 (2001-06-05) * abstract; figure 4 * * column 4, line 43 - column 5, line 27 * | 1,3,4 | |

TECHNICAL FIELDS SEARCHED (Int.Cl.7)

The present search report has been drawn up for all claims

| Place of search | Date of completion of the search | Examiner |
|---|---|---|
| THE HAGUE | 22 April 2002 | Faderl, I |

CATEGORY OF CITED DOCUMENTS

X : particularly relevant if taken alone
Y : particularly relevant if combined with another document of the same category
A : technological background
O : non-written disclosure
P : intermediate document

T : theory or principle underlying the invention
E : earlier patent document, but published on, or after the filing date
D : document cited in the application
L : document cited for other reasons

& : member of the same patent family, corresponding document

EPO FORM 1503 03.82 (P04C01)

## ANNEX TO THE EUROPEAN SEARCH REPORT
## ON EUROPEAN PATENT APPLICATION NO.

EP 01 30 5912

This annex lists the patent family members relating to the patent documents cited in the above-mentioned European search report.
The members are as contained in the European Patent Office EDP file on
The European Patent Office is in no way liable for these particulars which are merely given for the purpose of information.

22-04-2002

| Patent document cited in search report | | Publication date | Patent family member(s) | | Publication date |
|---|---|---|---|---|---|
| WO 0167142 | A | 13-09-2001 | AU<br>WO | 6291101 A<br>0167142 A2 | 17-09-2001<br>13-09-2001 |
| US 5991483 | A | 23-11-1999 | NONE | | |
| US 6081641 | A | 27-06-2000 | AU<br>WO | 1124199 A<br>9923518 A1 | 24-05-1999<br>14-05-1999 |
| US 5682445 | A | 28-10-1997 | US<br>CA<br>US | 5502782 A<br>2166742 A1<br>5719971 A | 26-03-1996<br>10-07-1996<br>17-02-1998 |
| JP 2000121844 | A | 28-04-2000 | NONE | | |
| US 6101301 | A | 08-08-2000 | NONE | | |
| DE 19724528 | A | 24-12-1998 | DE | 19724528 A1 | 24-12-1998 |
| US 6243527 | B1 | 05-06-2001 | NONE | | |

EPO FORM P0459

For more details about this annex : see Official Journal of the European Patent Office, No. 12/82